# EUROPÄISCHE PATENTSCHRIFT

(11) **EP 2 032 360 B1**
(45) Veröffentlichungstag und Bekanntmachung des Hinweises auf die Patenterteilung: **06.05.2015**
(21) Anmeldenummer: 07712524.3
(22) Anmeldetag: 14.03.2007
(51) Int. Cl.: B32B 27/30, B32B 27/40

(54) **TRANSPARENTER KUNSTSTOFF-VERBUND**
TRANSPARENT PLASTIC COMPOSITE
COMPOSITE TRANSPARENT À BASE DE MATIÈRES PLASTIQUES

(30) Priorität: 26.06.2006 DE 102006029613
(43) Veröffentlichungstag der Anmeldung: 11.03.2009
(73) Patentinhaber: Evonik Röhm GmbH, 64293 Darmstadt (DE)
(72) Erfinder: HÖSS, Werner, Shanghai 200237 (CN); ZIETEK, Michael, 64372 Ober-Ramstadt (DE); ENDERS, Michael, 64807 Dieburg (DE); EBERLE, Christian, 64347 Griesheim (DE); SCHRÖBEL, Sven, 64285 Darmstadt (DE); ALBRECHT, Klaus, 55129 Mainz (DE); BLASS, Rudolf, 64291 Darmstadt (DE); SCHULTES, Klaus, 65193 Wiesbaden (DE); SCHMIDT, Arne, 64285 Darmstadt (DE)
(86) Internationale Anmeldenummer: PCT/EP2007/052391
(87) Internationale Veröffentlichungsnummer: WO 2008/000528

(56) Entgegenhaltungen:
- EP-A- 1 577 084
- EP-A2- 0 239 877
- US-A- 4 046 933
- US-A- 4 177 099
- US-A- 4 594 290
- US-A- 5 229 204

## Beschreibung

### Gegenstand der Erfindung

Gegenstand der Erfindung ist ein Kunststoff-Verbund. Der Verbund besteht beispielsweise aus drei Schichten, wobei die beiden äußeren Schichten aus transparenten Polymethylmethacrylat (PMMA) und die innenliegende Schicht aus einem thermoplastischen Polyurethan (TPU) bestehen. Der Kunststoff-Verbund besteht den Kugelfalltest der ECE R43 (Anhang 3, 2) und verfügt gegenüber Standard-Kunststoffverbunden gleicher Dimension über verbesserte akustische Eigenschaften.

### Stand der Technik

EP 1 577 084 (KRD Coatings GmbH) beschreibt eine Kunststoff-Verbundscheibe für die Fahrzeugverscheibung mit einer Innenseite und einer Außenseite, wobei die Innenseite aus Polycarbonat (PC) und die Außenseite aus Poly(meth)acrylat (PMMA) besteht. Die Zwischenschicht, gedacht für die Aufnahme der unterschiedlichen Wärmeausdehnungen der Kunststoffen PC und PMMA, besteht aus einem thermoplastischen Polyurethan. (TPU) Angaben über die mechanische Festigkeit fehlen.

WO 02/47908 (VTEC Technologies) beschreibt ein Verglasungselement aus drei Schichten unterschiedlicher Kunststoffe, eine Schicht besteht aus PMMA, die Zwischenschicht aus einem Polyurethan (PU) oder aus Polyvinylbutyral (PVB), die weitere Schicht besteht aus PC. Die Außenseiten des Verglasungselements sind kratzfest beschichtet. Angaben über die mechanische Festigkeit oder sonstige mechanische Eigenschaften des Verglasungselements, außer Angaben zur Kratzfestigkeit, fehlen.

WO 96/13137 (Decoma International) beschreibt ein Verglasungselement für Fahrzeuge, in das Heizelemente integriert sind, wie beispielsweise in Heckscheiben von Fahrzeugen. Angaben über die mechanische Festigkeit fehlen.

### Aufgabe

Einschichtverglasungen aus PC würden auch ohne TPU oder PMMA-Schicht prinzipiell den mechanischen Anforderungen der ECE R43 genügen. Allerdings müssen diese Scheiben mit einer Kratzfest- und UV-Schutzschicht versehen werden. Herstellungsbedingt kommt es hierbei zu sehr hohen Ausschußraten, was sehr unwirtschaftlich ist. Ferner werden UV-Schutzlack und Kratzfestlack zusammen in einer Schicht auf das PC aufgetragen, was wiederum die Kratzfestigkeit des Systems vermindert. Als Lösung hierfür werden Systeme beschrieben, bei denen das PC mit einer Deckschicht aus UV-geschützten PMMA veredelt wird. Als Verbindungsschicht dient hierbei eine Schicht aus TPU oder PVB, welche im Wesentlichen die Aufgabe erfüllt, eine Haftung zwischen PC und PMMA-Schicht herzustellen. Ferner hat die TPU-Schicht bei diesen Systemen die Funktion, die unterschiedlichen Längenausdehnungen der beiden Materialien (PC und PMMA) durch seine hohe Elastizität zu kompensieren. Zusätzlich bietet eine solche Schicht auch die Möglichkeit, Heizdrähte für Heckscheibenheizungen zu integrieren. Reine PMMA-Scheiben bestehen den Kugelfalltest nicht.

Aufgabe der Erfindung ist es, einen transparenten Kunststoffverbund, der den Kugelfalltest der ECE R43 (Anhang 3, 2) besteht und gegenüber Standard-Kunststoffverbunden gleicher Dimension über verbesserte akustische Eigenschaften verfügt, zur Verfügung zu stellen.

### Lösung

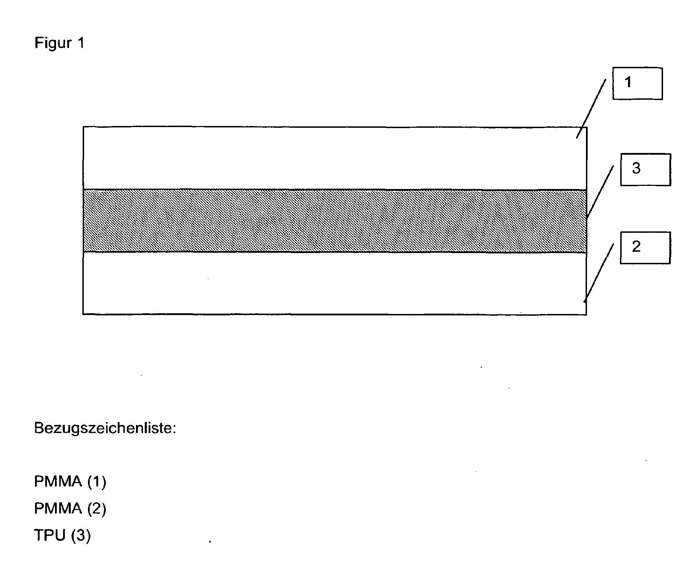

Der erfindungsgemäße Kunststoffverbund besteht aus mindestens drei Schichten aus Kunststoffen, wobei die beiden äußeren Schichten(1) und (2) aus transparenten Polymethylmethacrylat (PMMA) und die innenliegende Schicht aus einem thermoplastischen Polyurethan (TPU) (3) bestehen. (siehe Figur 1)

Schichtdicken von (1) und (2) liegen in Bereichen von 0,5 bis 6 mm, bevorzugt von 1 mm bis 3 mm, die von (3) im Bereich von 0,5-5 mm, bevorzugt von 0,5-1,5mm. Die Schichtdicken von (1) und (2) können gleich oder verschieden sein. Bevorzugt ist die Außenseite des Kunststoff-Verbunds dicker als die Innenseite des Kunststoff-Verbunds ausgeführt.

Prinzipiell ist es auch vorstellbar, das Material in einer nichttransparenten, eingefärbten Variante herzustellen und als Karosserieanbauteile zu verwenden. Die beiden äußeren Schichten(1) und (2) aus transparenten Polymethylmethacrylat (PMMA) können selbst wieder gegebenenfalls aus einem Verbund aus mindestens zwei Schichten aus PMMA aufgebaut sein.

Ferner können die Schichten (1) und (2) aus blends von PMMA und TPU, von PMMA und Styrol-Acrylnitril-Copolymeren (SAN), blends aus PMMA und schlagzähmodifizierten PMMA aufgebaut sein. Polymethylmethacrylat (PMMA), schlagzäh modifiziertes PMMA (sz-PMMA), Blends aus PMMA oder aus sz-PMMA und Fluor-Polymeren, z. B. Polyvinylidenfluorid (PVDF), wobei das Mischungsverhältnis zwischen PMMA oder sz-PMMA und PVDF z. B. zwischen 10 : 90 und 90 : 10 Gewichtsteilen betragen kann.

Der Verbund kann auch gegebenenfalls mit einer Kratzfestschicht und mit weiteren funktionellen Schichten ausgerüstet werden.

Die beiden äußeren Schichten(1) und (2) aus transparenten Polymethylmethacrylat (PMMA) können mit UV-Absorbern, UV-Stabilisatoren, IR-reflektierenden Pigmenten und Additiven oder Mischungen hieraus versehen sein.

Die Vorteile der Erfindung besteht darin, daß das PMMA/ TPU/ PMMA-Verbundsystem
▪ ohne Polycarbonat-Schicht die mechanischen Anforderungen der ECE R43, insbesondere den Kugelfalltest besteht.
▪ gegenüber einer einschichtigen Kunststoffscheibe mit vergleichbarer Dimension über verbesserte Akustik-Eigenschaften verfügt.
▪ gegenüber PC-Verbundsystemen nicht mit einer kombinierten UV- und Kratzfestschicht ausgerüstet werden muß.
▪ gegenüber schlagzähen PMMA-Varianten auch bei steigender oder sinkender Temperatur nicht eintrüben.
▪ gegenüber PC über ein besseres E-Modul (bessere Steifigkeit) verfügt und
▪ gegenüber PC/ TPU/ PMMA-Verbunden keine Probleme mit inneren Spannungen (ausgelöst durch unterschiedliche Längenausdehnungskoeffizienten) auftreten.

### Herstellung des Verbunds:

### Variante 1:

Die Verbundscheibe wurde durch Heißverpressen von (1) 300 x 300 x 2 mm PLEXIGLAS^{®} XT20700 glasklar, (3) 300 x 300 x 1 mm TPU-Folie (Krystalflex PE 429 oder PE 501, Firma Huntsman) und (2) 300 x 300 x 2 mm PLEXIGLAS^{®} XT 20700 erhalten. Die Temperatur der Presse lag zwischen 80°C und 140°C, die Aufheizzeit betrug zwischen 30 und 60 sec, der Druck lag zwischen 10 und 100 KN und wurde für 20 - 60 sek. angewandt. Die PLEXIGLAS^{®} XT - Typen werden von der Röhm GmbH in den Handel gebracht.

### Variante 2

Es ist auch denkbar, den Verbund durch einen 3-Komponenten-Spritzgussverfahren zu erzeugen. Hierbei ist es möglich, eine PLEXIGLAS^{®} - Folie mit einem Dekor zu bedrucken und anschließend mit TPU und PMMA zu hinterspritzen.

### Variante 3

Ferner ist es möglich, den erfindungsgemäßen Kunststoffformkörper durch Hinterspritzen eines Laminats aus einer PMMA-Folie oder - Platte (1) und einer TPU-Folie (3) mit PMMA (2) herzustellen.

### Die verwendeten Materialen

### Das PMMA

Ein bevorzugter Kunststoff für den Kunststoff-Verbund umfaßt Poly(meth)acrylate. Diese Polymere werden im allgemeinen durch radikalische Polymerisation von Mischungen erhalten, die (Meth)acrylate enthalten. Der Ausdruck (Meth)acrylate umfaßt Methacrylate und Acrylate sowie Mischungen aus beiden.

Diese Monomere sind weithin bekannt. Zu diesen gehören unter anderem (Meth)acrylate, die sich von gesättigten Alkoholen ableiten, wie beispielsweise Methylacrylat, Ethyl(meth)acrylat, Propyl(meth)acrylat, n-Butyl(meth)acrylat, tert.-Butyl(meth)acrylat, Pentyl(meth)acrylat und 2-Ethylhexyl(meth)acrylat; (Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat; Aryl(meth)acrylate, wie Benzyl(meth)acrylat oder Phenyl(meth)acrylat, wobei die Arylreste jeweils unsubstituiert oder bis zu vierfach substituiert sein können; Cycloalkyl(meth)acrylate, wie 3-Vinylcyclohexyl(meth)acrylat, Bomyl(meth)acrylat; Hydroxylalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat; Glycoldi(meth)acrylate, wie 1,4-Butandiol(meth)acrylat, (Meth)acrylate von Etheralkoholen, wie Tetrahydrofurfuryl(meth)acrylat, Vinyloxyethoxyethyl(meth)acrylat; Amide und Nitrile der (Meth)acrylsäure, wie N-(3-Dimethylaminopropyl)(meth)acrylamid, N-(Diethylphosphono)(meth)acrylamid, 1-Methacryloylamido-2-methyl-2-propanol; schwefelhaltige Methacrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis((meth)acryloyloxyethyl)sulfid; mehrwertige (Meth)acrylate, wie Trimethyloylpropantri(meth)acrylat.

Gemäß einem bevorzugten Aspekt der vorliegenden Erfindung enthalten diese Mischungen mindestens 40 Gew.-%, vorzugsweise mindestens 60 Gew.-% und besonders bevorzugt mindestens 80 Gew.-%, bezogen auf das Gewicht der Monomere, Methylmethacrylat.

Neben den zuvor dargelegten (Meth)acrylaten können die zu polymerisierenden Zusammensetzungen auch weitere ungesättigte Monomere aufweisen, die mit Methylmethacrylat und den zuvor genannten (Meth)acrylaten copolymerisierbar sind.

Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1; Acrylnitril; Vinylester, wie Vinylacetat; Styrol, substituierte Styrole mit einem Alkylsubstituenten in der Seitenkette, wie z. B. α-Methylstyrol und α-Ethylstyrol, substituierte Styrole mit einem Alkylsubstituenten am Ring, wie Vinyltoluol und p-Methylstyrol, halogenierte Styrole, wie beispielsweise Monochlorstyrole, Dichlorstyrole, Tribromstyrole und Tetrabromstyrole; heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole; Vinyl- und Isoprenylether; Maleinsäurederivate, wie beispielsweise Maleinsäureanhydrid, Methylmaleinsäureanhydrid, Maleinimid, Methylmaleinimid; und Diene, wie beispielsweise Divinylbenzol.

Im allgemeinen werden diese Comonomere in einer Menge von 0 Gew.-% bis 60 Gew.-%, vorzugsweise 0 Gew.-% bis 40 Gew.-% und besonders bevorzugt 0 Gew.-% bis 20 Gew.-%, bezogen auf das Gewicht der Monomeren, eingesetzt, wobei die Verbindungen einzeln oder als Mischung verwendet werden können.

Die Polymerisation wird im allgemeinen mit bekannten Radikalinitiatoren gestartet. Zu den bevorzugten Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoylperoxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, und UV-Initiatoren, wie 1,2-Diphenyl-2,2-dimethoxyethanon, Mischungen von zwei oder mehr der vorgenannten Verbindungen miteinander sowie Mischungen der vorgenannten Verbindungen mit nicht genannten Verbindungen, die ebenfalls Radikale bilden können.

Diese Verbindungen werden häufig in einer Menge von 0,01 Gew.-% bis 10 Gew.-%, vorzugsweise von 0,5 Gew.-% bis 3 Gew.-%, bezogen auf das Gewicht der Monomeren, eingesetzt.

Die zuvor genannten Polymere können einzeln oder als Mischung verwendet werden.

Die erfindungsgemäßen Kunststoffplatten können beispielsweise aus Formmassen der zuvor genannten Polymere hergestellt werden. Hierbei werden im allgemeinen thermoplastische Formgebungsverfahren eingesetzt, wie Extrusion oder Spritzguß.

Das Gewichtsmittel des Molekulargewichts Mw der erfindungsgemäß als Formmasse zur Herstellung der Kunststoffplatten zu verwendenden Homo- und/oder Copolymere kann in weiten Bereichen schwanken, wobei das Molekulargewicht üblicherweise auf den Anwendungszweck und die Verarbeitungsweise der Formmasse abgestimmt wird. Im allgemeinen liegt es aber im Bereich zwischen 20 000 und 1 000 000 g/mol, vorzugsweise 50 000 bis 500 000 g/mol und besonders bevorzugt 80 000 bis 300 000 g/mol, ohne daß hierdurch eine Einschränkung erfolgen soll.

Besonders bevorzugte Formmassen, die Poly(meth)acrylate umfassen, sind unter dem Handelsnamen PLEXIGLAS^{®} XT von der Fa. Röhm GmbH kommerziell erhältlich.

Besonders bevorzugt umfassen die Kunststoffplatten mindestens 80 Gew.-%, insbesondere mindestens 90 Gew.-%, bezogen auf das Gesamtgewicht der Platte, Poly(meth)acrylaten. Besonders bevorzugt bestehen die Kunststoffplatten aus Polymethylmethacrylat, wobei das Polymethylmethacrylat übliche Additive enthalten kann. Derartige Kunststoffplatten aus Polymethylmethacrylat sind unter anderem von Röhm GmbH unter der Handelsbezeichnung PLEXIGLAS^{®} XT kommerziell erhältlich.

Des weiteren können die Kunststoffplatten durch Gußkammerverfahren erzeugt werden. Hierbei werden beispielsweise geeignete Acrylharzmischungen in einer Form gegeben und polymerisiert. Derartig hergestellte Platten sind unter der Handelsbezeichnung PLEXIGLAS^{®} GS von der Fa. Röhm GmbH kommerziell erhältlich.

### Zusatzstoffe

Des weiteren können die zur Herstellungen der Kunststoffplatten zu verwendenden Formmassen sowie die Acrylharze übliche Zusatzstoffe aller Art enthalten. Hierzu gehören unter anderem Antistatika, Antioxidantien, Entformungsmittel, Flammschutzmittel, Schmiermittel, Farbstoffe, Fließverbesserungsmittel, Füllstoffe, Lichtstabilisatoren und organische Phosphorverbindungen, wie Phosphite oder Phosphonate, Pigmente, Verwitterungsschutzmittel und Weichmacher. Die Menge an Zusatzstoffen ist jedoch auf den Anwendungszweck beschränkt.

Diese Platten können transparent oder eingefärbt sein. Eine Färbung der Platten kann beispielsweise durch Farbstoffe oder Pigmente erzielt werden. Dementsprechend können beliebige Kunststoffplatten gemäß dem Verfahren der vorliegenden Erfindung miteinander kombiniert werden. Beispielsweise können PLEXIGLAS^{®} XT-Platten mit PLEXIGLAS^{®} GS-Platten und/oder PLEXIGLAS^{®} GS-Platten mit PLEXIGLAS^{®} SZ-Platten und/oder PLEXIGLAS ^{®} LSW-Platten mit PLEXIGLAS^{®} XT-Platten kombiniert werden, wobei eine farblose mit einer gefärbten Platten oder zwei farblose Platten oder zwei farbige Platten miteinander verbunden werden können.

### Fluor-Polymere

Unter Fluor-Polymeren sind im Rahmen der vorliegenden Erfindung Polymere zu verstehen, die durch die radikalische Polymerisation von olefinisch ungesättigten Monomeren erhalten werden können, an deren Doppelbindung sich mindestens ein Fluor-Substituent befindet. Hierbei sind auch Copolymere eingeschlossen. Diese Copolymere können neben einem oder mehreren fluorenthaltenden Monomeren weitere Monomere enthalten, die mit diesen fluorenthaltenden Monomeren copolymerisierbar sind.

Zu den fluorenthaltenden Monomeren gehören unter anderem Chlortrifluorethylen, Fluorvinylsulfonsäure, Hexafluorisobutylen, Hexafluorpropylen, Perfluorvinylmethylether, Tetrafluorethylen, Vinylfluorid und Vinylidenfluorid. Von diesen ist Vinylidenfluorid besonders bevorzugt.

### Thermoplastisches Polyurethan

Als thermoplastisches Polyurethan wird ein Produkt mit aliphatischen oder aromatischen Verbindungseinheiten verwendet.

Polyurethane (PUR) sind Polymere, in deren Makromolekülen die Wiederholungseinheiten durch Urethan-Gruppierungen -NH-CO-O - verknüpft sind. Polyurethane werden im allg. erhalten durch Polyaddition aus zwei- oder höherwertigen Alkoholen und Isocyanaten gemäß 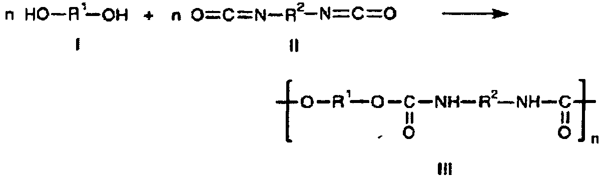 R1 u. R2 können dabei für niedermolekulare oder selbst schon polymere aliphatische od. aromatische Gruppen stehen. Technisch wichtige PUR werden hergestellt aus Polyester- und/oder Polyetherdiolen und z.B. 2,4- bzw. 2,6-Toluoldiisocyanat (TDI, R² = C₆H₃ -CH₃), 4,4 '-Methylendi(phenylisocyanat) (MDI, R² = C₆H₄ -CH₂ -C₆H₄), 4,4 '-Methylendicyclohexylisocyanat (HMDI, R² = C₆H₁₀ -CH₂ -C₆H₁₀) oder Hexamethylendiisocyanat [HDI, R² = (CH₂)₆].

Allgemein kann die Synthese der PUR Lösungsmittelfrei od. in inerten organischen. Lösungsmitteln erfolgen. Als Katalysatoren für die Polyaddition werden vielfach bestimmte Amine oder organische Zinn-Verbindungen. eingesetzt. Der Einsatz von bisfunktionellen Alkoholen und Isocyanaten in äquimolaren Verhältnissen führt zu linearen PUR. Verzweigte und vernetzte Produkte fallen bei Mitverwendung von höherfunktionellen Edukten oder auch bei Isocyanat-Überschuß an, bei dem Isocyanat-Gruppen mit Urethan- bzw. Harnstoff-Gruppen unter Ausbildung von Allophanat- bzw. Biuret-Strukturen reagieren, z.B.:

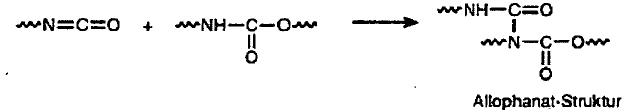

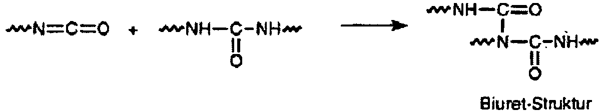

Entsprechend fallen je nach Wahl und stöchiometrischen Verhältnis der Ausgangsstoffe PUR mit sehr unterschiedlichen mechanischen Eigenschaften an, die als Bestandteile von Klebstoffen und Lacken (P.-Harze), als Ionomere, als thermoplastische Material für Lagerteile, Rollen, Reifen, Walzen verwendet werden und als mehr oder weniger harte Elastomere in Faserform (Elastofasern, Kurzzeichen PUE für diese Elastan- od. Spandex-Fasern) od. als Polyether- bzw. Polyesterurethan-Kautschuk (Kurzzeichen EU bzw. AU nach DIN ISO 1629: 1981-10), als duroplastische Gießharze (auch glasfaserverstärkt) u. v. a. aber als Schaumkunststoffe vielfältige Einsatzmöglichkeiten finden; s. a. Polyurethan-Kautschuke, Polyurethan-Lacke, Polyurethan-Harze. Weiterhin wurden PUR u.a. in Kunststoffe 85, 1616 (1995), Batzer 3, 158-170 Batzer 3, 158-170; Domininghaus (5.), S. 1140 ff.; Encycl. Polym. Sci. Eng. 13, 243-303; Houben-Weyl E 20/2, 1561-1721 beschrieben.

### Infrarot-reflektierende Pigmente

Durch den Einsatz von verschiedenen Infrarot-reflektierenden, anorganischen Farbpigmenten in PMMA - Formmasse können mit diesen Formmassen dunkelfarbige Kunststoffformkörper hergestellt und andere Kunststoffformkörper mit den vorher erwähnten PMMA - Formmassen beschichtet werden, die eine deutlich geringere Aufheizrate bei Sonneneinstrahlung aufweisen als Formkörper, die aus konventionell dunkel eingefärbtem PMMA bestehen oder mit diesem beschichtet sind.

Folgende Pigmente können beispielsweise eingesetzt werden:

| **CAS- Nummer** | **C.I. Name** | **C.I. Nummer** | **Chemie** |
|---|---|---|---|
| 68186-85-6 | C.I. Pigment Green 50 | C.I. 77377 | Cobalt titanite green spinel |
| 1308-38-9 | C.I. Pigment Green 17 | C.I. 77288 | Chromium oxide |
| 109414-04-2 | C.I. Pigment Brown 29 | | Chromium iron oxide |
| 68187-09-7 | C.I. Pigment Brown 35 | C.I. 77501 | Iron chromite brown spinel |
| 71631-15-7 | C.I. Pigment Black 30 | C.I. 77504 | Nickel iron chromite black spinel |

| | | | |
|---|---|---|---|
| C.I. Nomenklatur nach Colour Index, The Society of Dyers and Colourists (SDC) | | | |

### Untersuchung der Proben

Muster, die nach der Variante 1 hergestellt wurden, haben den Kugelfalltest nach ECE R43, (Anhang 3, Absatz 2.1 und Anhang 14, Absatz 5)erfolgreich bestanden.

Die Fallhöhe der Kugel betrug 4,37 m, das Gewicht der Kugel betrug 225 g bei einem Durchmesser von 38 mm. Es wurden jeweils 5 Proben bei 23 Grad Celsius und fünf Proben bei -18 Grad Celsius geprüft.

Ergebnisse: Bei allen geprüften Mustern hat die Kugel das Material nicht durchschlagen, es sind keine Teile abgesplittert. Die Prüfung ist bestanden worden.

Ein orientierender Versuch bei minus 40 Grad Probentemperatur ergab im Vergleich zu den Messungen bei höherer Temperatur deutlich kürzerer Risse im Probenkörper.

## Patentansprüche

1. Kunststoff-Verbund,
**dadurch gekennzeichnet, dass**
er aus mindestens zwei Poly(meth)acrylat-Schichten (1), (2) und einer Schicht aus einem thermoplastischen Polyurethan (3) besteht, und dass die Schichtdicken von (1) und (2) jeweils im Bereich von 0,5 bis 6 mm liegt und dass die Schichtdicke von (3) im Bereich von 0,5 bis 5 mm liegt.

2. Kunststoff-Verbund nach Anspruch 1,
**dadurch gekennzeichnet, dass**
auf einer oder beiden Außenseiten der Poly(meth)acrylat-Schichten (1), (2) eine Kratzfestschicht angeordnet ist.

3. Verwendung des Kunststoff-Verbunds nach einem der vorhergehen Anspruche für Verglasungszwecke.

4. Verwendung des Kunststoff-Verbunds nach einem der vorhergehen Ansprüche als Bauteil für Lärmschutzwände.

5. Nichttransparenter Kunststoff-Verbund nach Anspruch 1
**dadurch gekennzeichnet, dass**
er aus mindestens zwei Poly(meth)acrylat-Schichten (1), (2), besteht, wobei mindestens eine Schicht eingefärbt ist.

6. Transparenter oder nichttransparenter Kunststoff-Verbund nach Anspruch 1
**dadurch gekennzeichnet, dass**
er aus mindestens zwei Poly(meth)acrylat-Schichten (1), (2), besteht, wobei mindestens eine Schicht mit einem IR-reflektierenden Pigment und Additiven oder mit einem Gemisch aus verschiedenen IR-reflektierenden Pigmenten und Additiven versehen ist.

7. Transparenter oder nichttransparenter Kunststoff-Verbund nach Anspruch 1 oder Anspruch 5.
**dadurch gekennzeichnet, dass**
er aus mindestens zwei Poly(meth)acrylat-Schichten (1), (2), besteht, wobei mindestens eine Schicht mit einem UV-Absorber oder einem Gemisch aus verschiedenen UV-Absorbern versehen ist.

8. Transparenter oder nichttransparenter Kunststoff-Verbund nach Anspruch 1 oder Anspruch 5
**dadurch gekennzeichnet, dass**
er aus mindestens zwei Poly(meth)acrylat-Schichten (1), (2), besteht, wobei mindestens eine Schicht mit einem Schlagzähmodifier versehen ist.

9. Verwendung des Kunststoff-Verbunds nach einem der vorhergehenden Ansprüche für Karosseriebauzwecke.

10. Karosseriebauteil, ausgerüstet mit einem Kunststoff-Verbund nach einem der vorhergehenden Ansprüche.

11. Verfahren zur Herstellung eines Kunststoff-Verbunds nach Anspruch 1 bis 8,
**dadurch gekennzeichnet, dass**
man die Kunststoffscheiben auf 80°C bis 140°C erhitzt und bei 10 und 100 KN für 20 - 60 sek. presst.

## Claims

1. Plastics composite,
**characterized in that**
it is composed of at least two poly(meth)acrylate layers (1), (2) and of a layer composed of a thermoplastic polyurethane (3), and **in that** the layer thickness of (1) and (2) are in each case in the range from 0.5 to 6 mm and **in that** the layer thickness of (3) is in the range from 0.5 to 5 mm.

2. Plastics composite according to Claim 1,
**characterized in that**
a scratch-resistant layer has been arranged on one or both external sides of the poly(meth)acrylate layers (1), (2).

3. Use of the plastics composite according to any of the preceding claims for glazing purposes.

4. Use of the plastics composite according to any of the preceding claims as component for noise barriers.

5. Non-transparent plastics composite according to Claim 1,
**characterized in that**
it is composed of at least two poly(meth)acrylate layers (1), (2), where at least one layer has been coloured.

6. Transparent or non-transparent plastics composite according to Claim 1,
**characterized in that**
it is composed of at least two poly(meth)acrylate layers (1), (2), where at least one layer has been provided with an IR-reflective pigment and with additives or with a mixture composed of various IR-reflective pigments and additives.

7. Transparent or non-transparent plastics composite according to Claim 1 or Claim 5,
**characterized in that**
it is composed of at least two poly(meth)acrylate layers (1), (2), where at least one layer has been provided with a UV absorber or with a mixture composed of various UV absorbers.

8. Transparent or non-transparent plastics composite according to Claim 1 or Claim 5,
**characterized in that**
it is composed of at least two poly(meth)acrylate layers (1), (2), where at least one layer has been provided with an impact modifier.

9. Use of the plastics composite according to any of the preceding claims for bodywork construction purposes.

10. A bodywork component, equipped with a plastics composite according to any of the preceding claims.

11. Process for production of a plastics composite according to Claim 1 to 8,
**characterized in that**
the plastics sheets are heated to from 80°C to 140°C and are pressed for from 20 to 60 sec., using from 10 to 100 kN.

## Revendications

1. Composite à base de matières plastiques, **caractérisé en ce qu'**il se compose d'au moins deux couches de poly(méth)acrylate (1), (2) et d'une couche d'un polyuréthane thermoplastique (3), et **en ce que** les épaisseurs de couche de (1) et (2) se situent respectivement dans la plage de 0,5 à 6 mm et **en ce que** l'épaisseur de couche de (3) se situe dans la plage de 0,5 à 5 mm.

2. Composite à base de matières plastiques selon la revendication 1, **caractérisé en ce qu'**une couche résistant aux rayures est disposée sur un côté ou sur les deux côtés extérieurs des couches de poly(méth)acrylate (1), (2).

3. Utilisation du composite à base de matières plastiques selon l'une quelconque des revendications précédentes pour des applications de vitrage.

4. Utilisation du composite à base de matières plastiques selon l'une quelconque des revendications précédentes comme composant pour des parois d'insonorisation.

5. Composite non transparent à base de matières plastiques selon la revendication 1, **caractérisé en ce qu'**il se compose d'au moins deux couches de poly(méth)acrylate (1), (2), dans lequel au moins une couche est teintée.

6. Composite transparent ou non transparent à base de matières plastiques selon la revendication 1, **caractérisé en ce qu'**il se compose d'au moins deux couches de poly(méth)acrylate (1), (2), dans lequel au moins une couche est munie d'un pigment réfléchissant les IR et d'additifs ou d'un mélange de différents pigments réfléchissant les IR et additifs.

7. Composite transparent ou non transparent à base de matières plastiques selon la revendication 1 ou la revendication 5, **caractérisé en ce qu'**il se compose d'au moins deux couches de poly(méth)acrylate (1), (2), dans lequel au moins une couche est munie d'un absorbeur d'UV ou d'un mélange de différents absorbeurs d'UV.

8. Composite transparent ou non transparent à base de matières plastiques selon la revendication 1 ou la revendication 5, **caractérisé en ce qu'**il se compose d'au moins deux couches de poly(méth)acrylate (1), (2), dans lequel au moins une couche est munie d'un modificateur de résilience.

9. Utilisation du composite à base de matières plastiques selon l'une quelconque des revendications précédentes pour des applications de construction de carrosserie.

10. Composant de carrosserie, équipé d'un composite à base de matières plastiques selon l'une quelconque des revendications précédentes.

11. Procédé de fabrication d'un composite à base de matières plastiques selon une des revendications 1 à 8, **caractérisé en ce que** l'on chauffe les disques de matière plastique à 80°C à 140°C et on les presse à 10 et 100 kN pendant 20 - 60 secondes.
